(19) Europäisches Patentamt
European Patent Office
Office européen des brevets

(11) **EP 1 925 348 A1**

(12) # EUROPEAN PATENT APPLICATION

(43) Date of publication:
**28.05.2008 Bulletin 2008/22**

(51) Int Cl.:
***A63F 13/00*** *(2006.01)*

(21) Application number: **07022962.0**

(22) Date of filing: **27.11.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS**<br><br>(30) Priority: **27.11.2006 US 604241** | (71) Applicant: **Mistwalker Holdings Inc.**<br>**Honolulu HI 96815 (US)**<br><br>(72) Inventor: **Sakaguchi, Hironobu**<br>**Honolulu, HI 96815 (US)**<br><br>(74) Representative: **Zimmermann, Gerd Heinrich et al**<br>**Zimmermann & Partner,**<br>**P.O. Box 330 920**<br>**80069 München (DE)** |

(54) **System and method of a game that shares a specific property of a character with team members**

(57) A video game on a computer readable media that has a plurality of team characters under a single control is disclosed. Action Points (an activity parameter) are assigned to each team character. The Action Points can be combined together and can be used by one or more of the team characters. The Action Points will decrease if a team character moves, fights against an enemy character or performs another activity. Following the turn and use of the Action Points by one of the team characters, the remaining Action Points can be passed on to the next team character during their turn for use at that time. After the next team character has completed their turn, then the remaining Action Points can be passed on to the further team character during their turn for use at that time. When the amount of Action Points of the team becomes zero (0), no team character can move any further during their team's turn.

FIG. 1

## Description

BACKGROUND OF THE INVENTION

1. Field of the Invention

This invention relates to a system and method of operating a simulation role playing video.

2. Discussion of the Related Art

A roll playing game (RPG), has gained widespread popularity recently. In a roll playing game (RPG), a player moves a character as his alter ego and creates a story with a game master. By acting as the character, the player can act in a virtual world created by the game master. It is a game in which the player directs each character to create a story.

Another type of game is a simulation game.

A simulation roll playing game (SRPG) is a game that combines features from the simulation game and the RPG.

The player in a SPRG can appreciate the story making process of the RPG and the war tactics of a war simulation together. A conventional SPRG processes movement and fighting of each character separately and also offers an imaginary experience of fighting and adventure of a group to the player.

In a conventional game, group movement has been done by moving a plurality of characters on coordinates represented in a 2-dimensional manner while forming a group. For example, Japanese Patent Application Laid-Open No. 08-63613 discloses a technique where a character follows a main character which is a leader of the group based on moving speed and timing/ probability of a change of direction set for each character in advance.

However, in the technique disclosed in the above reference, the predetermined moving speed and the predetermined timing/probability of changing direction are not changed in accordance with a situation in which the other characters are moving. Therefore, the technique described in the above reference has a problem because the moving state of the group cannot be expressed based on reality since the moving speed and other properties are set and cannot be changed.

U.S. Patent No. 6,525,736 (Japanese Patent Application Publication No. 2001-56870) discloses a group character moving method where a plurality of characters, that are displayed in a 3-dimensional virtual space, having a leader form a group to move to target locations which are set in advance. The positions and accelerations of each of the plurality of characters belonging to the group are computed for each individually.

U.S. Patent No. 6,736,724 (Japanese Patent Application Publication No. 2001-149655) discloses a group character battle method in which a plurality of characters that are displayed in a 3-dimensional virtual space form groups of friends and enemies that battle against one another. Each character belonging to the group searches for an enemy character within its own range of vision and approaches the enemy character to start a battle.

In U.S. Patent Nos. 6,525,736 and 6,736,724, since each character is individually processed, the movement action or battle action of each character in the team or group can be expressed realistically. However, no attention is paid to the offensive (attack) power of the group or the defensive strength of the group. Thus there is no way for the player to make decisions based on these pieces of information.

Also, U.S. Patent No. 6,729,954 (Japanese Patent Application Publication No. 2002-143557) discloses a character group battle method which can express an uneven distribution of the attack power or defensive strength of the group comprising a plurality of characters. According to this method, within a predetermined time period, the position of each character in a 3-dimensional virtual space is calculated, a character number related to the other friend characters existing in a predetermined region about the character is calculated, an attack value and a defensive value expressing the attack power and the defensive strength of the character are calculated on the basis of the character number, and a color correction value is calculated for changing the color tone of the character according to the attack value and the defensive value.

According to U.S. Patent No. 6,729,954, the attack power or defensive strength is set for a respective character based on the density of a group comprising the character and the other friend characters in the vicinity. However, there is no calculation or use of a predetermined parameter or property which can be shared among members of the group. Thus, it is difficult for the player to enjoy the game in an enhanced and tactical manner.

It is believed that there is no reference showing a system where a predetermined parameter or property is shared among members of the team. Except for the situation where fellow team members take their turn after the team leader, the action of one of the team members does not directly affect the actions of the other team members. Therefore, previous players could not enjoy using a strategy to plan and arrange the movement of each team member based on the shared property.

SUMMARY OF THE INVENTION

The aforementioned problems are at least partly solved by a computer-readable storage-medium containing a game program as laid out in claim 1, a computer-readable storage-medium containing a game program as laid out in claim 12, and a computer-readable storage-medium containing a game program as laid out in claim 16. Further aspects, details, features and embodiments are evident from the dependent claims, the description and the accompanying drawings.

The present invention relates to a game that comprises two or more groups, at least one of which is a group or team that the player controls and the other group (or groups) represent an enemy. Every group has a plurality of characters and each team character is given some predetermined parameters. One of the parameters used in this game is called Action Points. Action Points represent the amount of action (or activity) of a player. By adding up the Actions Points of all characters in the group, the total amount of Action Points of the entire team can be determined.

At the beginning of the game, each group has 100% of their Action Points. As a character of the team moves or fights, points are deducted from the original amount of the Action Points. The player can freely determine how the Action Points are used by the team members. For example, one team member can use up most of the Action Points, or the Action Points can be used by all of the team members. Since the Action Points can be easily shown in a bar on the screen, the player can make a strategy of how to use the Action Points by each member when deciding the actions of each team member.

At the beginning of each new turn, the Action Points are redefined according to a predetermined formula. For example, when the previous turn ends with zero Action Points or the Action Points of the team becomes zero, the Action Points of the team for the next turn will be a total of the remaining Action Points of the previous turn + [(the standard AP amount of each of the remaining characters) x (a fixed ratio)].

If the Action Points are reduced to zero for the team, no team member can move or fight (or otherwise be active) during the current turn of the team. Thus, the team characters have to wait for their next turn when their Action Points are replenished as described above.

The team characters gain experience in moving and fighting during the game. This means the reduction in the number of Action Points of the team following moving or fighting is reduced. For example, the first time a team character attacks the enemy, they may use 100% of the Action Points. After the team member has gained experience in fighting, they may only use 80%, 60%, or 40%, etc. of the previously used Action Points, as they gain more and more experience.

An object of this invention is to provide a method of sharing a predetermined parameter or property among characters of the same team.

Another object of the present invention is to provide a method to control the movement and fighting of each team character by increasing or decreasing a predetermined parameter based on the action of each character.

Yet another object of the present invention is to provide a method where the predetermined parameter or property can be shared by other team members based on a choice by the game player.

Yet another object of the present invention is to provide a method that displays a predetermined activity parameter on a display screen so that the game player can easily tell the current amount of the remaining activity parameter to determine their next action.

Yet another object of the present invention is to provide a method for increasing or replenishing the predetermined parameter for each character according to predetermined formulas for each character at the beginning of each new turn.

The present invention is accomplished by a computer-readable storage medium containing a game program for controlling a plurality of team characters on a screen, wherein the game program causes a microprocessor to perform a process comprising the steps of: assigning an amount of action points to each team character; determining a total amount of action points of a team; assigning the total amount of action points to a first team character; performing an action with the first team character based on a game input; calculating an amount of action points used based on the step of performing an action with the first team character; reducing the amount of action points determined in the step of calculating from the total amount of action points to obtain an amount of remaining action points; and assigning the amount of remaining action points to a second team character.

The present invention is also accomplished by a computer-readable storage medium containing a game program for controlling a plurality of team characters on a screen, wherein the game program causes a microprocessor to perform a process comprising the steps of: assigning an amount of action points to each team character; determining a total amount of action points of a team; determining a first team character to use a search command; assigning the total amount of action points to the first team character; executing the search command so that the first team character may find an item; calculating an amount of the action points used based on the step of executing the search command; and reducing the total amount of the action points by the action points determined in the step of calculating to obtain an amount of remaining action points; and assigning the amount of remaining action points to a second team character.

The present invention is also accomplished by a computer-readable storage medium containing a game program for controlling a plurality of team characters on a screen, wherein said game program causes a microprocessor to perform a process comprising the steps of: assigning an amount of action points to each team character; determining a total amount of action points of the team by summing up the action points assigned to each team character in the step of assigning; determining an amount of health points and an amount of magic points for each team character; assigning the total amount of action points of the team determined in the step of determining a total amount of action points to one of the team characters; moving one of the team characters based on a game input; calculating an amount of the action points used based on the step of moving; reducing the total amount of action points by the amount of action points determined in the step of calculating; detecting contact between one of the team characters and an enemy character; determining whether one of the team characters can engage in a battle against the enemy character; determining whether any of the other team characters can join in the battle against the enemy character; battling between 1) one of the team characters and any of the team characters and 2) the enemy character; calculating an amount of the action points used based on the step of battling; and reducing the total amount of action points by the amount of action points determined in the step of calculating an amount of the action points used based on the step of battling to obtain an amount of remaining action points.

The present invention is also accomplished by a computer-readable storage medium containing a game program for controlling a plurality of team characters on a screen, wherein the game program causes a microprocessor to perform a process comprising the steps of: assigning an amount of action points to each team character; determining a total amount of action points of a team including summing up the amount of action points assigned to each team character; displaying a bar on a display indicating the total amount of action points of the team; determining an amount of health points and an amount of magic points of each team character; displaying a grid on the display, the grid being represented by a plurality of colored square boxes indicating a movable area of one of the team characters; determining one of the team characters to move to a different position in the movable area; moving one of the team characters; calculating an amount of action points used based on the step of moving; reducing the total amount of action points by the amount of action points determined in the step of calculating an amount of action points used based on the step of moving; detecting contact between one of the team characters and an enemy character; determining whether there is a minimum amount of action points for one of the team characters to battle; determining whether any other team characters are positioned within a predetermined range; determining whether any other team characters can join in the battle against the enemy character including determining whether there is a minimum amount of action points for the other team characters to join in the battle; determining a target enemy character in the attacking area; battling between 1) one of the team characters and any of the team characters and 2) the enemy character; calculating an amount of the action points used based on the step of battling; and reducing the total amount of action points by the amount of action points determined in the step of calculating an amount of the action points used to obtain an amount of remaining action points.

BRIEF DESCRIPTION OF THE DRAWINGS

The above and other objects and features of the present invention will be clearly understood from the following description with respect to embodiments thereof when considered in conjunction with the accompanying drawings, wherein the same reference numerals have been used to denote the same or similar parts or elements, and in which:

Fig. 1 is a drawing illustrating one stage of the game and shows a grid on the playing area and bars under each character representing a specific parameter.
Fig. 2 is a drawing illustrating that the character has moved from one position to another position.
Fig. 3 is a flowchart showing the steps of a battle between characters according to the present invention.
Fig. 4 is a drawing illustrating the team members who can join in a battle with the selected character and enemy characters that can be attacked in this battle.
Fig. 5 is a flowchart showing the steps of a character using magic according to the present invention.
Figs. 6A-6B is a flowchart showing the steps of a character using a search command according to the present invention.

DETAILED DESCRIPTION OF THE PREFERRED EMBODIMENTS

The present invention will be described in detail by reference to the accompanying drawings. The following will describe examples of the present invention in a Simulation Role Playing Game (SRPG), when there is a battle between a plurality of characters that form a team and a plurality of characters that form an enemy.

A main parameter used in this invention relates to a parameter called an Action Point (AP). The AP relates to an amount of activity that a character in the game uses doing a particular event or activity. The Action Points will be described in detail following a brief introduction to the general game play according to this invention.

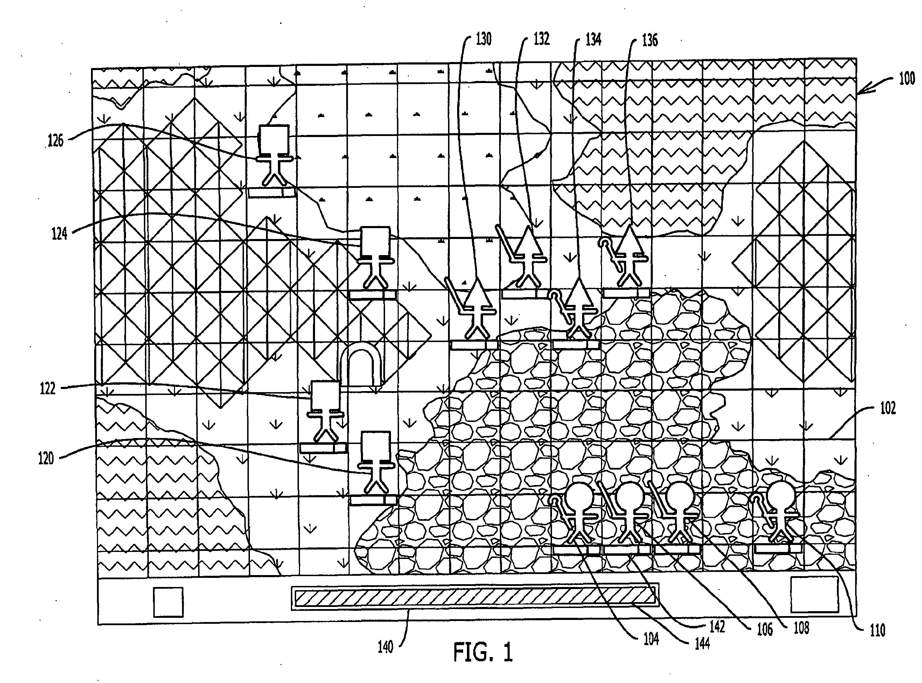

The way to play the game will be described with Figs. 1-4 that show the progress of the game. As shown in Fig. 1, when the video game starts, a plurality of teams appear on a screen 100 of a display device, e.g., a TV monitor. There are three teams A, B and C in this example. The team A comprises characters 104, 106, 108 and 110. The team B comprises characters 130, 132, 134 and 136. The team C comprises characters 120, 122, 124 and 126. In this example, team A and team B battle against team C. In this embodiment, a bar 140 shown below the screen indicates the AP amount of the team. In this example, the bar 140 indicates the AP amount of the team A. Since FIG. 1 shows the beginning of the game, the AP amount is a maximum value and the bar on the display goes all the way to an end point 144. A bar 142 shown below each character indicates the amount of Health Points (HP) or Magic Points (MP) (described below). A grid 102 is formed by a plurality of square boxes on the screen as shown in Fig. 1. When a character moves, it moves from box or grid square to the next box or grid square.

A character's health is characterized in numerical points known as the Health Points or Hit Points (hereinafter "HP"). The HP shows how much damage that an attack will give to a character. For example, when an enemy character attacks a team character, the HP of the team character will decrease according to an amount of damage the character receives due to the attack. Conversely, when a team character succeeds in an attack, the HP of the enemy character will decrease. The HP is determined by the type and strength of the attack. When the HP of a character becomes 0, the character will die. The HP can be displayed as a bar below the character as shown in FIGS. 1, 2 and 4 or can be shown by a numerical value.

The Magic Points (hereinafter "MP") are units of magical power. When a character uses a magic spell, some points will be reduced from that character's available MP for using the spell. In general, the more powerful a spell is, the more MP it consumes when used. When the MP of a character becomes 0, the character cannot use magic any more so that it will be a disadvantage to the team.

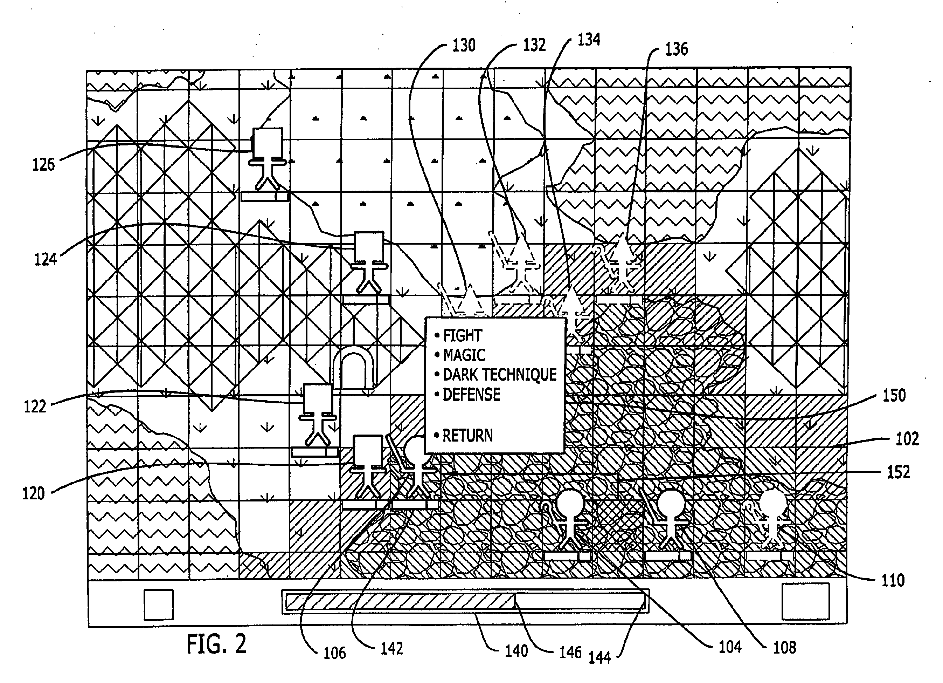

Fig. 2 is a drawing showing another stage of the game according to an embodiment of the present invention. For example, the player selected the team character 106 to act first. The player determines which grid square the selected character should move to and places a touch pen or a cursor on the grid. Then the team character 106 moves to the selected grid following along the path of an arrow 152. Due to this movement, the AP amount of the team will decrease and the bar 140 indicating the amount of the AP goes down to a point 146.

After the team character 106 moves, options of other possible actions appear in a box 150 next to the character 106. By moving a touch pen or a cursor, a player selects one of the commands from the command option list to determine a next action of the character. At this time, other team characters 104 and 108 can join in the action with the character 106. However, if a character is too far from the character 106, the character cannot join in the action. For example, since the character 110 is too far from the character 106 as shown in Fig. 2, the character 110 cannot join in the action with other team characters 106, 104 and 108. Thus, the character 110 and its HP bar becomes translucent on the screen as shown in Fig. 2 so that the player can easily tell characters who can join the action from those who cannot. Also, the other team members 130, 132, 134 and 136 that are too far from the main character become translucent.

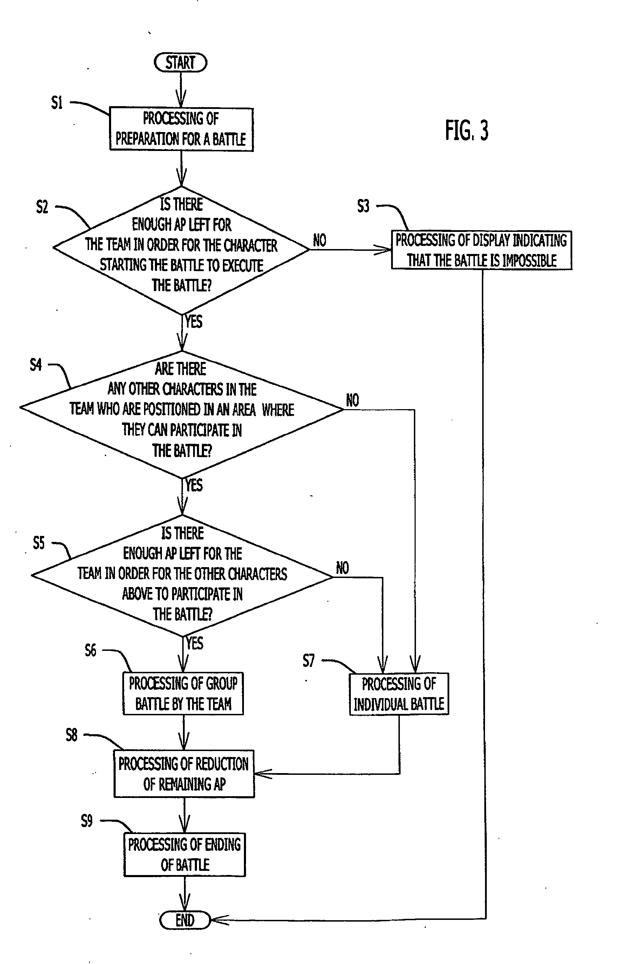

When the player selects the Fight command from the command option list 150, steps of the battle are executed as shown in the flowchart of FIG. 3. Once the player selects the Fight command, the system processes preparation for a battle in step S1. Then the system determines in step S2 whether there is a minimum AP amount left for the team in order for the character starting the battle to execute the battle. If there is not a minimum AP amount for the character to execute the battle, the system processes a display indicating that the battle is impossible in step S3. If there is enough AP amount, the system determines in step S4 whether there are any other characters in the same team who are positioned in an area where they can participate in the battle. If there is no other character who is positioned in such an area, the system processes an individual battle by the character in step S7. If there is one or more characters, the system then determines in step S5 whether there is a minimum AP amount left for the team in order for the other characters above to participate in the battle. If there is not a minimum AP amount left, the system processes an individual battle by the character in step S7. If there is enough AP amount left, then the system processes a group battle by the character and the other characters in step S6. After either the group battle or the individual battle is executed, the system processes a reduction of the remaining AP amount due to the battle in step S8. After the reduction of AP amount is done, the system processes the ending of the battle in step S9.

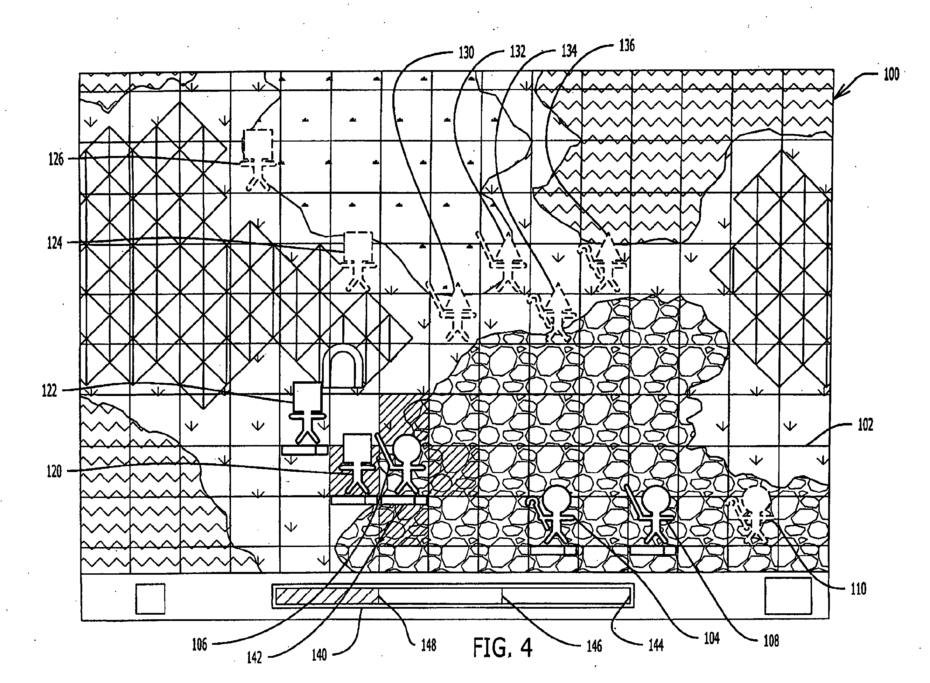

In FIG. 4, the enemy characters 124 and 126 are translucent since they are positioned too far to be attacked. The bar 140 indicating the amount of the AP is further reduced to an amount 148 due to the battle.

Now, the Action Points of the Team Tactics System (TTS) of an embodiment of the present invention will be explained below. The concepts of Action Points of an embodiment of the present invention are described below. The team as a whole has one total AP amount. In other words, the team characters share the total AP amount of the team, and it does not matter how the AP amount is shared by the team characters as long as the AP amount of the team is available. It is possible that the AP amount of the team is used up by one team character. For example, if one of the team characters moves a long distance or uses a strong magic or a strong technique, he could use up the whole AP amount of the team by himself. It is also possible that the AP amount is equally shared by all of the team characters.

The AP amount of the team will decrease by, for example, a movement or a battle by a character. If the AP amount of the team becomes 0, nobody in the team can move further. In other words, movements of all of the team characters are limited by the AP amount of the team.

The AP amount of the team can be shown as a bar at the bottom of the screen of the display as shown in FIGS. 1, 2 and 4 so that it is easy to recognize the current AP amount of the team.

There are many possible ways to determine the AP amount that the team has at the beginning of the game. For example, the AP amount of the team can be simply the AP amount of a leader of the team. The AP amount of the team can also be a sum of the AP amount of a leader and the AP amount of all other members. Alternatively, some variables can be added to the above formula. For instance, the AP amount of the team can be calculated as: the AP amount of a leader + (sum of the AP amount of all other members) X (an adjusted value). The adjusted value may be a ratio of compatibility between a leader and the other members. For example, a value of 1 means very compatible, 0.1 means very incompatible, 0.5 not compatible, and 0.8 means compatible. Another variable can be added, and the AP amount of the team can also be calculated as: the AP amount of a leader + (sum of the AP amount of all other members) X (adjusted value) X (a compatibility rate). Here the compatibility rate means how easy for a leader to lead the other team members. For example, when the motivation of other members is high or when a leader is located in an area which makes him easy to lead others, such as being on the top of a tower, it is easy for the leader to lead the other characters, thus the compatible rate is 1. For example, if it is not so easy, the rate is 0.5.

When the next turn of the team starts, the AP amount of the team is redefined. There can be many possible ways to redefine the AP amount of the team. For example, when the turn ends or the AP amount of the team becomes 0, the AP amount of the team for the next turn may be calculated as: a total of the remaining AP amount of previous turn + [(standard AP amount of each of remaining characters) x (a fixed ratio)].

An example of a calculation of consumption of the AP amount will now be explained. For example, in the case discussed above with FIG. 4, there are three characters comprising a main character 106 and two supporting characters 104 and 108 participating in the battle. A total AP amount of all the characters is called All AP amount. A basic AP amount of the main character is called AP1. A basic AP amount of each of the supporting characters is called AP2 and AP3. The total Action Points consumed due to the battle is calculated as follows: All AP = MAP1 + NAP2 + NAP3 (M and N are a coefficient).

This formula is now explained with concrete numbers. Assume that a basic AP amount of the main attacking character (AP1) is 50 points. On attack, the main attacking character consumes 100% (M) of the standard attack points. Thus, the consumption of the AP amount by the main character due to the attack is 50 points. Also assume that the basic AP amount of each of the supporting characters (AP2 and AP3) is 60 points. On attack, each supporting character consumes 60% (N) of the standard attack value. Thus, the consumption of the AP amount by each of the supporting characters is 36 points. Therefore, the total consumption of the AP amount (All AP) by this attack will be 122 points: 50 points (for the main character) + 36 points (for the supporting character) + 36 points (the other supporting character). This is merely one example of the calculation of the AP amount of the team, and depending on the type of game, other methods of calculation are possible.

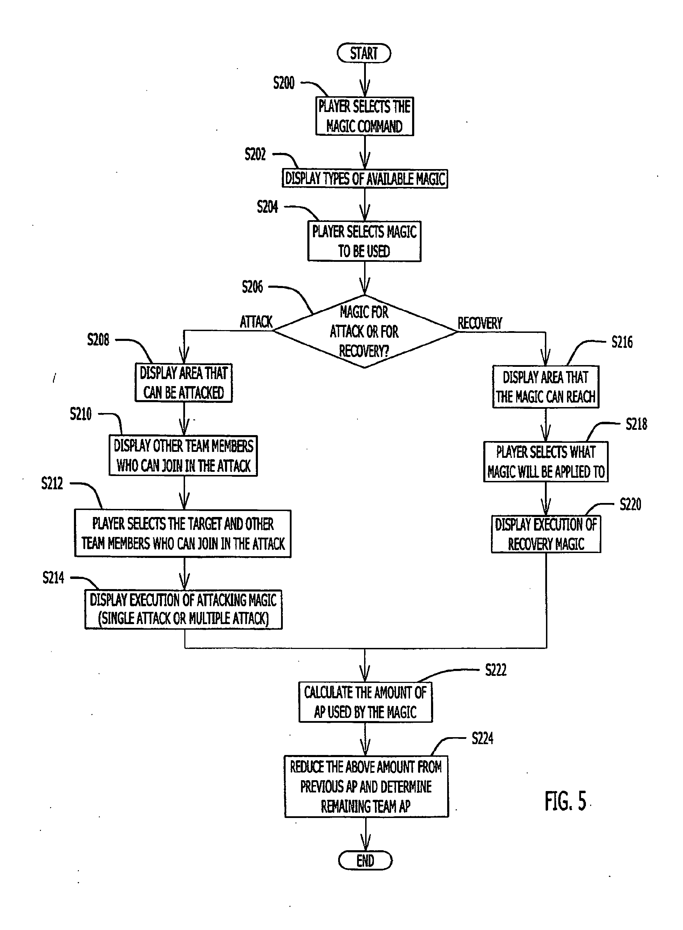

Fig. 5 is a flowchart showing steps of using a magic in an embodiment of the present invention. When a player selects the magic command from the command option list in step S200, a list of several types of available magic appears in the display in step S202. At the same time, the explanation of each magic and required amount of MP by using each magic appears on the screen. In step S204, the player selects magic from the list.

When the player selects recovery magic in step S204, an area in which the magic can take effect will be displayed on the screen in step S216. In step S218, the player selects to what the recovery magic will be applied. After the magic will be executed in step S220, the system calculates the AP amount used by the magic in step S222, and the amount is reduced from the previous AP amount of the AP to determine the remaining AP amount of the team in step S224.

The Search command will now be explained below. The following concepts of the Search command are included in an embodiment of the present invention: 1) By executing the Search command, specific characters of the team can find and gather a building item or food (to recover HP/MP) in a certain area in a certain probability. 2) The player can operate the Search command in sequence as long as an AP amount is available. The Search command requires a certain AP amount, and the AP amount of the team will decrease regardless of whether or not an item is found and gathered. 3) If there is a specific character next to the character executing the Search command, the probability to find an item will go up due to the support by the specific character. 4) In the Search command, geographical information to find an item will be explained below.

It is possible that a particular character in the team finds an item in a certain terrain to help the team. The AP amount of the team will decrease according to this activity as described below. For example, one of the team characters may have an ability to make a bridge by gathering logs from the forest. When the character flies over the forest to find an item, the AP amount of the team will decrease due to this movement. Also, when the character cuts down trees to obtain a log, the AP amount of the team will decrease due to this action. Also, when the character moves to a location to build a bridge, the AP amount of the team will decrease due to this movement. Also, when the character builds a bridge, the AP amount of the team will decrease due to this activity.

Another character in the team may have an ability to make a dead end in a road by gathering a rock from a rough area. Also, another character of the team may have an ability to make a lake by gathering water from the sea or a river. In these activities, the AP amount of the team will also decrease by each movement from one location to another and by each action as discussed above.

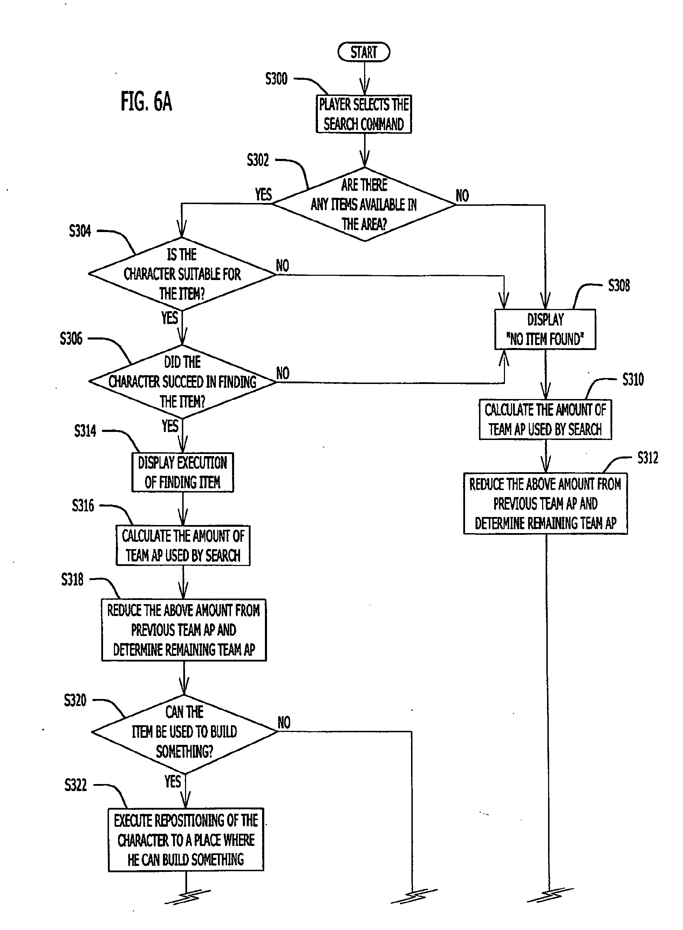

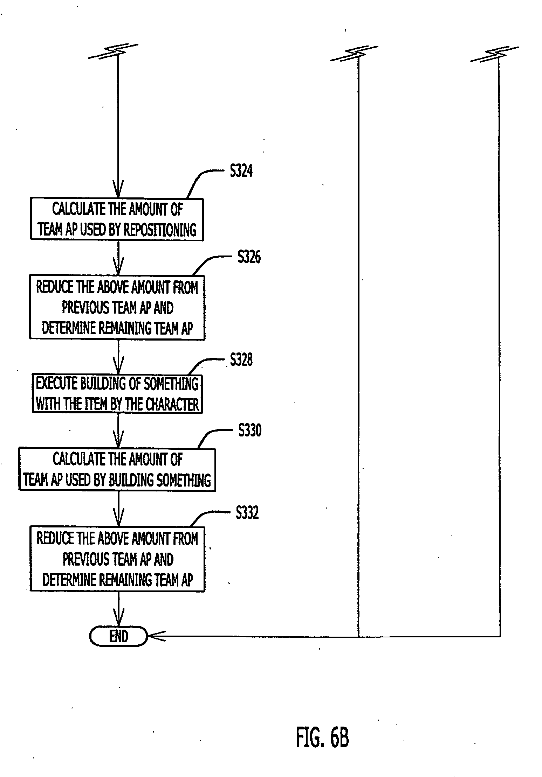

FIGS. 6A-6B show a flowchart showing steps of executing the Search command in an embodiment of the present invention. When a player selects the Search command in step S300, the system determines whether there are any items available in the area based on map coordination in step S302. If no item is available in the area, the display "No Item Found" will appear on the screen in step S308. The system then calculates the amount of the AP used by the search in step S310, and the amount is reduced from the previous amount of the AP to determine the remaining AP amount of the team in step S312. If there is any item available in the area, the system determines whether the character is suitable for the item. If the answer is no, the display "No Item Found" will appear on the screen and the rest of the steps is the same as steps S310 and S312. Even if the character is more suitable for finding the item, the character sometimes fails to find the item in step S306. If the character cannot find the item, the display illuminates "No Item Found" on the screen in step S308, and the rest of the steps are the same as steps S310 and S312. If the location is a possible location to find and gather an item, the executing character is a suitable character to gather the item, and the character succeeds in finding the item, the execution of finding the item will be displayed in step S314. The system then calculates the amount of the AP used by the search in step S316, and the amount is reduced from the previous AP amount to determine the remaining AP amount of the team in step S318. The system then determines whether the item found can be used to build something. If the answer is yes in step S320, the character will be repositioned to a place where he can build something in step S322. The AP amount of the team will decrease due to this operation in steps S324 and S326. The character then builds something with the item in step S328, and the AP amount of the team will decrease due to this operation in steps S330 and S332.

An automatic recovery system of the AP amount of the team will be explained below. At the next turn of the team, those characters who are located in an automatic recovery area for the team will recover some HP and some MP automatically. An amount of the recovery depends on a location of a character. For example, if a character is located in a castle or a fort, he may recover 50%. If he is in a village, a town or a reinforced territory, the character may recover 35%. If he is located at a wall outside of a castle or at one night territory, the character may recover 25%. If the location of a character is none of the above, the character may not recover any AP.

If the leader is next to a character or is in a command area, the amount of the automatic recovery may be adjusted. The recovery of the HP may go up 15% and the recovery of the MP may go up 30%, for example.

In a situation other than the automatic recovery, if a character executes a healing function or uses a recovery item, the character can recover some of the HP. Also, the recovery item can be used not only by the character who has the recovery item but also by other characters who are next to the character.

The present invention has been specifically described based on the embodiments but it should be noted that the present invention is by no means intended to be limited to the above embodiments but a variety of modifications and changes can be made within the scope of the claims without departing from the sprit of the invention.

Though the above embodiments describe application of the present invention to the SRPG, the application range of the present invention is not limited to this type of game. The present invention can also be applied to games of other types, such as simulation games, adventure games, and so on.

The invention is also directed to an apparatus for carrying out the disclosed methods and including apparatus parts for performing each described method steps. These method steps may be performed by way of hardware components, a computer programmed by appropriate software, by any combination of the two or in any other manner. Furthermore, the invention is also directed to methods by which the described apparatus operates. It includes method steps for carrying out every function of the apparatus.

**Claims**

1. A computer-readable storage medium containing a game program for controlling a plurality of team characters on a screen, wherein said game program causes a microprocessor to perform a process comprising the steps of:

   assigning an amount of action points to each team character;
   determining a total amount of action points of a team;
   assigning the total amount of action points to a first team character;
   performing an action with the first team character based on a game input;
   calculating an amount of action points used based on said step of performing an action with the first team character;
   reducing the amount of action points determined in said step of calculating from the total amount of action points to obtain an amount of remaining action points; and
   assigning the amount of remaining action points to a second team character.

2. The computer-readable storage medium according to claim 1, wherein said step of determining a total amount of action points of a team includes summing up the amount of action points assigned to each team character.

3. The computer-readable storage medium according to claim 1, further comprising the step of determining an amount of at least one of health points and magic points for each team character.

4. The computer-readable storage medium according to claim 1, further comprising the steps of:

> determining whether one of the team characters can engage in a battle against an enemy character;
> determining whether any of the other team characters can join in the battle against the enemy character;
> battling between 1) one of the team characters and any of the other team characters and 2) the enemy character;
> calculating an amount of the action points used based on said step of battling; and
> reducing the total amount of action points by the amount of action points determined in said step of calculating an amount of the action points used based on said step of battling.

**5.** The computer-readable storage medium according to claim 4, wherein said step of determining whether one of the team characters can engage in a battle against an enemy character includes detecting contact between one of the team characters and the enemy character.

**6.** The computer-readable storage medium according to claim 4, wherein said step of determining whether one of the team characters can engage in a battle against the enemy character includes determining whether there is a minimum amount of action points for one of the team characters to battle the enemy character.

**7.** The computer-readable storage medium according to claim 4, wherein said step of determining whether any of the other team characters can join in the battle against the enemy character includes determining whether any other team characters are positioned within a predetermined range of the enemy character.

**8.** The computer-readable storage medium according to claim 4, wherein said step of determining whether any of the other team characters can join in the battle against the enemy character includes determining whether there is a minimum amount of action points for the other team characters to join in the battle.

**9.** The computer-readable storage medium according to claim 1, wherein said step of determining a total amount of action points of the team includes calculating the action points as follows:

$$TAP = MAP1 + NAP2 + NAP3$$

(where TAP is the total amount of action points of the team, AP1 is the amount of action points of a main team character, AP2 and AP3 are the amounts of action points of the other team characters, and M and N are coefficients).

**10.** The computer-readable storage medium according to claim 4, wherein said step of battling includes having one of the team characters using magic against the enemy character.

**11.** The computer-readable storage medium according to claim 10, further comprising the steps of:

> calculating an amount of action points used based on using magic against the enemy character; and
> reducing a current amount of action points by the amount of action points determined in said step of calculating an amount of action points based on using magic against the enemy character.

**12.** A computer-readable storage medium containing a game program for controlling a plurality of team characters on a screen, wherein said game program causes a microprocessor to perform a process comprising the steps of:

> assigning an amount of action points to each team character;
> determining a total amount of action points of a team;
> determining a first team character to use a search command;
> assigning the total amount of action points to the first team character;
> executing the search command so that the first team character may find an item;
> calculating an amount of the action points used based on said step of executing the search command; and
> reducing the total amount of the action points by the action points determined in said step of calculating to obtain an amount of remaining action points; and
> assigning the amount of remaining action points to a second team character.

**13.** The computer-readable storage medium according to claim 12, wherein said step of determining a total amount of action points of a team includes summing up the amount of action points assigned to each team character.

**14.** The computer-readable storage medium according to claim 12, further comprising the steps of:

> determining a desired location to move the first team character to, for using the item;

moving the first team character to the desired location;

calculating an amount of action points used based on said step of moving; and

reducing a current amount of action points by the amount of action points determined in said step of calculating an amount of action points used based on said step of moving.

15. The computer-readable storage medium according to claim 14, further comprising the steps of:

making a product using the item;

calculating an amount of action points used based on making the product; and

reducing the current amount of action points by the amount of action points determined in said step of calculating an amount of action points used based on said step of making a product.

16. A computer-readable storage medium containing a game program for controlling a plurality of team characters on a screen, wherein said game program causes a microprocessor to perform a process comprising the steps of:

assigning an amount of action points to each team character;

determining a total amount of action points of the team by summing up the action points assigned to each team character in said step of assigning;

determining an amount of health points and an amount of magic points for each team character;

assigning the total amount of action points of the team determined in said step of determining a total amount of action points to one of the team characters;

moving one of the team characters based on a game input;

calculating an amount of the action points used based on said step of moving;

reducing the total amount of action points by the amount of action points determined in said step of calculating;

detecting contact between one of the team characters and an enemy character;

determining whether one of the team characters can engage in a battle against the enemy character;

determining whether any of the other team characters can join in the battle against the enemy character;

battling between 1) one of the team characters and any of the other team characters and 2) the enemy character;

calculating an amount of the action points used based on said step of battling; and

reducing the total amount of action points by the amount of action points determined in said step of calculating an amount of the action points used based on said step of battling to obtain an amount of remaining action points.

17. The computer-readable storage medium according to claim 16, further comprising the step of assigning the amount of remaining action points to another team character.

18. A computer-readable storage medium containing a game program for controlling a plurality of team characters on a screen, wherein said game program causes a microprocessor to perform a process comprising the steps of:

assigning an amount of action points to each team character;

determining a total amount of action points of a team including summing up the amount of action points assigned to each team character;

displaying a bar on a display indicating the total amount of action points of the team;

determining an amount of health points and an amount of magic points of each team character;

displaying a grid on the display, said grid being represented by a plurality of colored square boxes indicating a movable area of one of the team characters;

determining one of the team characters to move to a different position in the movable area;

moving one of the team characters;

calculating an amount of action points used based on said step of moving;

reducing the total amount of action points by the amount of action points determined in said step of calculating an amount of action points used based on said step of moving;

detecting contact between one of the team characters and an enemy character;

determining whether there is a minimum amount of action points for one of the team characters to battle;

determining whether any other team characters are positioned within a predetermined range;

determining whether any other team characters can join in the battle against the enemy character including determining whether there is a minimum amount of action points for the other team characters to join in the battle;

determining a target enemy character in the attacking area;

battling between 1) one of the team characters and any of the other team characters and 2) the enemy character;

calculating an amount of the action points used based on said step of battling; and
reducing the total amount of action points by the amount of action points determined in said step of calculating an amount of the action points used, to obtain an amount of remaining action points.

19. The computer-readable storage medium according to claim 18, further comprising the step of assigning the amount of remaining action points to one of the other team characters.

FIG. 1

FIG. 2

- FIGHT
- MAGIC
- DARK TECHNIQUE
- DEFENSE

- RETURN

FIG. 3

START

S1 — PROCESSING OF
PREPARATION FOR A BATTLE

S2 — IS THERE
ENOUGH AP LEFT FOR
THE TEAM IN ORDER FOR THE CHARACTER
STARTING THE BATTLE TO EXECUTE
THE BATTLE?
— NO → S3 — PROCESSING OF DISPLAY INDICATING
THAT THE BATTLE IS IMPOSSIBLE

YES

S4 — ARE THERE
ANY OTHER CHARACTERS IN THE
TEAM WHO ARE POSITIONED IN AN AREA  WHERE
THEY CAN PARTICIPATE IN
THE BATTLE?
— NO

YES

S5 — IS THERE
ENOUGH AP LEFT FOR THE
TEAM IN ORDER FOR THE OTHER CHARACTERS
ABOVE TO PARTICIPATE IN
THE BATTLE?
— NO

YES

S6 — PROCESSING OF GROUP
BATTLE BY THE TEAM

S7 — PROCESSING OF
INDIVIDUAL BATTLE

S8 — PROCESSING OF REDUCTION
OF REMAINING AP

S9 — PROCESSING OF ENDING
OF BATTLE

END

FIG. 4

START

S200 — PLAYER SELECTS THE MAGIC COMMAND

S202 — DISPLAY TYPES OF AVAILABLE MAGIC

S204 — PLAYER SELECTS MAGIC TO BE USED

S206 — MAGIC FOR ATTACK OR FOR RECOVERY?

ATTACK

S208 — DISPLAY AREA THAT CAN BE ATTACKED

S210 — DISPLAY OTHER TEAM MEMBERS WHO CAN JOIN IN THE ATTACK

S212 — PLAYER SELECTS THE TARGET AND OTHER TEAM MEMBERS WHO CAN JOIN IN THE ATTACK

S214 — DISPLAY EXECUTION OF ATTACKING MAGIC (SINGLE ATTACK OR MULTIPLE ATTACK)

RECOVERY

S216 — DISPLAY AREA THAT THE MAGIC CAN REACH

S218 — PLAYER SELECTS WHAT MAGIC WILL BE APPLIED TO

S220 — DISPLAY EXECUTION OF RECOVERY MAGIC

S222 — CALCULATE THE AMOUNT OF AP USED BY THE MAGIC

S224 — REDUCE THE ABOVE AMOUNT FROM PREVIOUS AP AND DETERMINE REMAINING TEAM AP

FIG. 5

END

15

**FIG. 6A**

START

S300 — PLAYER SELECTS THE SEARCH COMMAND

S302 — ARE THERE ANY ITEMS AVAILABLE IN THE AREA?

YES / NO

S304 — IS THE CHARACTER SUITABLE FOR THE ITEM?

NO / YES

S306 — DID THE CHARACTER SUCCEED IN FINDING THE ITEM?

NO / YES

S308 — DISPLAY "NO ITEM FOUND"

S310 — CALCULATE THE AMOUNT OF TEAM AP USED BY SEARCH

S312 — REDUCE THE ABOVE AMOUNT FROM PREVIOUS TEAM AP AND DETERMINE REMAINING TEAM AP

S314 — DISPLAY EXECUTION OF FINDING ITEM

S316 — CALCULATE THE AMOUNT OF TEAM AP USED BY SEARCH

S318 — REDUCE THE ABOVE AMOUNT FROM PREVIOUS TEAM AP AND DETERMINE REMAINING TEAM AP

S320 — CAN THE ITEM BE USED TO BUILD SOMETHING?

NO / YES

S322 — EXECUTE REPOSITIONING OF THE CHARACTER TO A PLACE WHERE HE CAN BUILD SOMETHING

FIG. 6B

**European Patent Office**

## EUROPEAN SEARCH REPORT

Application Number

EP 07 02 2962

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/252535 A1 (ISHIHATA YOSHIFUMI [JP] ET AL) 9 November 2006 (2006-11-09) * paragraphs [0034], [0037] * | 1-19 | INV. A63F13/00 |
| A | US 2006/142085 A1 (KIM TAEK-JIN [KR]) 29 June 2006 (2006-06-29) * paragraph [0060] * | 1-19 | |
| A | US 2004/157194 A1 (LIBBY VIBEKE [US]) 12 August 2004 (2004-08-12) * abstract * | 1-19 | |

TECHNICAL FIELDS SEARCHED (IPC)

A63F

The present search report has been drawn up for all claims

| Place of search | Date of completion of the search | Examiner |
|---|---|---|
| Munich | 28 February 2008 | Arnold, Stuart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 02 2962

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2008

| Patent document cited in search report | | Publication date | Patent family member(s) | | Publication date |
|---|---|---|---|---|---|
| US 2006252535 | A1 | 09-11-2006 | NONE | | |
| US 2006142085 | A1 | 29-06-2006 | KR 20040042121 A | | 20-05-2004 |
| | | | TW 245660 B | | 21-12-2005 |
| US 2004157194 | A1 | 12-08-2004 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8063613 A
- US 6525736 B
- JP 2001056870 A
- US 6736724 B
- JP 2001149655 A
- US 6729954 B
- JP 2002143557 A